# EUROPEAN PATENT SPECIFICATION

(11) **EP 2 935 389 B1**
(45) Date of publication and mention of the grant of the patent: **29.11.2017**
(21) Application number: 13821284.0
(22) Date of filing: 18.12.2013
(51) Int. Cl.: C08G 59/00, C09K 3/10, C08L 63/00, H02G 15/08

(54) **NON-ISOCYANATE SEALANT FOR ELECTRICAL CABLE JOINING**
ISOCYANATFREIES DICHTMITTEL ZUM VERBINDEN VON STROMKABELN
AGENT D'ÉTANCHÉITÉ NON-ISOCYANATE POUR JONCTION DE CÂBLE ÉLECTRIQUE

(30) Priority: 21.12.2012 US 201261745521 P
(43) Date of publication of application: 28.10.2015
(73) Proprietor: Dow Global Technologies LLC, Midland, MI 48674 (US)
(72) Inventor: KNIGHT, Nicole, Rosharon, TX 77583 (US); WILMOT, Nathan, Midland, MI 48674 (US); ATHEY, Phillip, S., Midland, MI 48674 (US); HEATH, William, Lake Jackson, TX 77566 (US); SHAH, Harshad, M., Missouri City, TX 77459 (US)
(74) Representative: Beck Greener
(86) International application number: PCT/US2013/076242
(87) International publication number: WO 2014/100242

(56) References cited:
- FR-A- 1 342 582
- US-A1- 2010 227 949

## Description

This invention relates to a non-isocyanate sealant for cable joining and to a method of joining electrical cables.

When electrical cables are joined, it is necessary to repair the electrical insulation around the joint. One common way of accomplishing this is to mold a curable organic resin around the joint. The molded resin forms a sheath around the joint and bonds to the polymeric electrical insulation of the cables. This forms a continuous seal which not only provides electrical insulation, but also protects against the intrusion of humidity and liquids such as water.

The curable organic resin needs to meet several criteria. When cured, it must adhere well to the cable insulation. The bond between the cured resin and the cable insulation needs to be impervious to liquids and moisture and have good hydrolytic stability. The bond needs to be long-lasting, as the joined cable may be in operation for many years in locations where it is not easily accessible for repair. The cured resin also must be a good electrical insulator, having, for example, a relative permittivity of 5 or less at room temperature at 1 kHz. The cured resin must be resistant to breakdown in the presence of an electrical field produced by the current passing through the cable.

Processing characteristics are also important attributes for the curable organic resin. Cable splicing is frequently performed in the field, *i.e.,* at the point of use of the cable. In addition, the amount of organic resin needed to make a particular splice is sometimes quite small, on the order of a kilogram or less, although in some cases these amounts can be quite substantial, up to 30 liters in volume or more. These considerations dictate that the curable polymer system be capable of application using simple methods. Complex polymer processing equipment usually is not available in these in-field locations, and in any event often is not adapted very well for managing such small volumes of material. Another consideration due to in-field application is that heating equipment is usually not available. This means that the curable organic resin must be capable of application and curing at ambient temperature for the application, without applied heating.

The curable organic resins systems used in these cable joining applications typically include two liquid components that are mixed, applied to the cable joint and then cured to form a sheath about the joint. The liquid components should be low to moderate in viscosity, so they can be mixed and applied easily. The mixed components need to have a pot life of several minutes or more to allow time to complete the mixing and the application of the mixture onto the joint. After the reaction mixture is applied to the joint, it should cure reasonably quickly to form a polymer that bonds strongly to the cable insulation.

To date, two-component polyurethane and two-component epoxy resins systems have mainly been used for this application. The polyurethane systems work very satisfactorily, but there are potential worker exposure concerns if polyisocyanate compounds are not handled properly. In addition, polyisocyanates can react with water to produce carbon dioxide, which can lead to foaming.

FR1342582 describes a method and composition for repairing defects of the sheaths of electric cables under pressure. The composition comprises a) 100 parts by weight of at least one liquid polysulfide polymer terminated with a mercaptan having an average molecular weight of at least 3500 and a degree of cyclization of from 1.5 to 5%; b) about 30 to 70 of at least one filler; c) about 6 to 12 parts by weight of at least one polyepoxide curing agent; and d) about 0.1 to 1.5 of at least one alkaline curing catalyst.

US2010227949 describes a curable composition containing a vinyl-based polymer (I) having one or more crosslinkable functional groups at a terminus on average, a nucleophilic agent (II) and preferably further containing an epoxy resin (III).

Epoxy resin systems suffer from two main problems. First, they tend to be too rigid and brittle to be entirely satisfactory. A second problem is that the curing reaction tends to be highly exothermic. The heat of reaction causes a large temperature increase. In many cases, the temperature increase is enough to damage the cable, and in particular the polymeric insulation. That damage leads to defects in the insulation.

Therefore, it would be desirable to provide an isocyanate-free curable resin system for joining cables, which has a good pot life, which cures at room temperatures without the application of heat, which is not highly exothermic, and which cures to form a polymer having low electrical permittivity, resists breakdown in the presence of an electrical field, and which forms a good bond to the polymeric insulation used in electric cables

This invention is in one aspect a method for making a cable joint, comprising the steps of:
a) joining a first bare conductor end of a first cable having a polymeric insulation to a second bare conductor end of a second cable having a polymeric insulation to create a conductor joint and
b) applying a curable reaction mixture over the conductor joint and in contact with the polymeric insulation of the first cable and the second cable and
c) curing the curable reaction mixture to form a polymeric insulating sheath over the conductor joint and bonded to the polymeric insulation of each of the first and second cables;
wherein the curable reaction mixture contains 1) at least one polyene compound having an average of at least two groups containing aliphatic carbon-carbon double bonds capable of reaction with a thiol group, wherein at least one of such aliphatic carbon-carbon double bonds is separated from each of said aliphatic carbon-carbon double bonds by an aliphatic spacer group having a molecular weight of at least 1000 atomic mass units, 2) from 25 to 150 parts by weight, per 100 parts by weight of component 1), of at least one epoxy resin having an average of at least 1.5 epoxide groups per molecule and an epoxy equivalent weight of up to 1000, 3) at least one curing agent having at least two thiol groups, and 4) at least one basic catalyst.

This invention provides a readily-processable thermosetting, elastomeric joining composition for cable joining. The joining composition does not require the presence of isocyanate compounds. The composition has a usefully low viscosity. It can cure spontaneously at room temperature or even somewhat lower temperatures and therefore can be used without application of heat. The cured composition forms a strong elastomeric sheath which bonds strongly to polymeric cable insulation and which exhibits useful electrical properties and low permeability to gases and liquids.

The electrical cables to be joined in accordance with the invention include one or more conductors (wires) and a polymeric electrical insulation surrounding the conductors. Typically the conductors are individually insulated, and in the case of a multiwire cable, the individually-insulated wires are sheathed in another polymeric insulator. The polymeric insulator may be, for example, neoprene, polyethylene, ethylene propylene rubber, ethylene propylene diene rubber, a chlorosulfonated polyethylene, another type of polyolefin, polyvinylchloride, a nitrile rubber such as a polymer or copolymer of acrylonitrile, a diene rubber such as a polymer or copolymer of butadiene, a polyurethane, and the like. The conductors are typically metals such as copper, aluminum and steel. The conductor size range may be, for example, from AWG (American Wire Gauge) 40 (about 0.0799 mm diameter) to 4/0 (about 11.684 mm diameter).

The cable joint is made by joining a bare (*i.e.,* uninsulated) conductor end of a first cable to a bare conductor end of a second cable to create a conductor joint. If multiwire cables are to be joined, then each of the conductors of each of the cables is joined in similar manner. Similarly, if more than two cables are to be joined, the conductors of all the cables are joined as necessary for the particular wiring protocol, including, if necessary, applying electrical tape or other insulation over the individual splices. Then a curable reaction mixture is applied over the conductor joint and in contact with the polymeric insulation of the first cable and the second cable. The curable reaction mixture is cured to form a polymeric insulating sheath over the conductor joint and bonded to the polymeric insulation of each of the first and second cables.

It is often convenient to perform the applying and curing steps in a mold, by which it is meant any device which holds the reaction mixture in place until it cures. A mold may have a one-piece or two-piece type adapted to fit over a cable conductor joint. A typical mold is designed at its ends to fit tightly around the cables when the mold is closed. Alternatively (or in addition), the ends of the mold can be blocked off using a tape or other means to prevent the reaction mixture from leaking out before it cures. Such a mold typically has a larger cross-section central region that forms a reservoir encompassing the cable joint, and has an opening for introducing the curable reaction mixture into the reservoir. An example of such a mold is that marketed by 3M United Kingdom PLC in its Scotchcast™Flexible Power Cable Jointing Kits, 82-F and 82-BF series. In certain embodiments, the mold is positioned over the cable joint and the curable reaction mixture is poured into and cured in the mold.

The curable reaction mixture contains a polyene compound, an epoxy resin, a curing agent that contains thiol groups and at least one basic catalyst.

The polyene compound has at least two aliphatic carbon-carbon double bonds ("ene groups") capable of engaging in a thiol-ene addition reaction. At least one of these ene groups is spaced apart from each of the other ene groups by a flexible aliphatic spacer group having a molecular weight of at least 1000 atomic mass units. It is preferred that each of these ene groups is spaced apart from each of the others by such a flexible aliphatic spacer group. The ene groups preferably are terminal, *i.e.,* at the ends of the molecular chains.

The polyene preferably has no more than 8, more preferably no more than 6, still more preferably no more than 4 ene, groups.

The ene groups are aliphatic or, less preferably, alicyclic carbon-carbon double bonds in which a hydrogen atom is bonded to at least one of the carbon atoms. The carbon-carbon double bonds can take the form:

-RC=CR'R"

wherein R, R' and R" are independently hydrogen or an organic substituent, which organic substituent may be substituted, provided at least one of R, R' and R" is a hydrogen atom. Any of R, R' and R" may be, for example, alkyl or substituted alkyl group having up to 12, preferably up to 4 and more preferably up to 3 carbon atoms. R is preferably hydrogen or methyl. It is preferred that R' and R" are each hydrogen and more preferred that R, R' and R" are all hydrogen.

In some embodiments, the ene groups are provided in the form of terminal α,β-unsaturated carboxylate groups, such as, for example, acrylate (-O-C(O)-CH=CH₂) groups or methacrylate (-O-C(O)-C(CH₃)=CH₂) groups. In some embodiments, the ene groups are terminal vinyl (-CH=CH₂) groups. The vinyl groups may be vinylaryl groups, in which the vinyl group is bonded directly to a ring carbon of an aromatic ring such as a phenyl ring. In some embodiments, the ene groups are terminal allyl (-CH₂-CH=CH₂) groups. The polyene compound may have ene groups of different types, or all of the ene groups can be the same.

The spacer groups each have a weight of at least 1000 atomic mass units, preferably at least 1500 atomic mass units, more preferably at least 2000 atomic mass units, still more preferably at least 3000 atomic mass units and in some embodiments at least 4000 atomic mass units. The weight of the flexible spacer groups may be as much as 20,000, and preferably is up to 12,000, more preferably up to 8000. The spacer groups each preferably include at least one chain having a molecular weight of at least 1000 atomic mass units which, upon curing, produces in the resulting elastomer an elastomeric phase having a glass transition temperature of no greater than -20°C, preferably no greater than -35°C and more preferably no greater than -40°C.

The spacer groups are aliphatic. Preferred aliphatic spacer groups include groups that contain sequences of linear or branched aliphatic carbon-carbon single bonds and/or non-conjugated double bonds, aliphatic ether bonds, aliphatic amine bonds, and/or other like bonds within their main chain. Such sequences may be, for example at least 5 atoms or at least 10 atoms in length and may be up to several hundred atoms in length. These sequences may be interspersed with various linking groups such as amide, urethane, urea, ester, imide carbonate and the like. These sequences may be interspersed with aromatic groups, provided that such aromatic groups preferably constitute no more than 25%, preferably no more than 5% of the weight of the aliphatic spacer group.

In preferred embodiments, each of the spacer groups contains an aliphatic polyether chain, which may form all or a portion of such spacer groups. The aliphatic polyether chain preferably has a molecular weight of at least 500, more preferably at least 1000, still more preferably at least 1500, to as much as 20,000, preferably up to 12,000 and more preferably up to 8,000. The polyether chain may be, for example, a polymer of ethylene oxide, 1,2-propylene oxide, 1,2-butylene oxide, 2,3-butylene oxide, tetramethylene oxide, and the like. It has been found that polyether chains having side groups, such as, for example, polymers of 1,2-propylene oxide, 1,2-butylene oxide, 2,3-butylene oxide and the like, provide particularly good results in forming a phase-segregated polymer having good properties. An especially preferred spacer group contains a poly(1,2-propylene oxide) chain or a random propylene oxide-co-ethylene oxide chain in which the ethylene oxide chain contains up to 40%, preferably up to 25%, more preferably up to about 15%, by weight copolymerized ethylene oxide. Such especially preferred spacer groups may have terminal poly(ethylene oxide) segments, provided that such segments should not in the aggregate constitute more than 40%, preferably not more than 25% and more preferably not more than 15% of the total weight of the polyether.

A preferred class of polyene compounds are ene-terminated polyethers, especially ene-terminated polyethers having a molecular weight of at least 2000 (preferably at least 4000) up to 12,000 (preferably up to 8,000) and from 2 to 8, preferably 2 to 6 or 2 to 4 ene groups per molecule. There are several approaches to making those materials. One approach involves capping the hydroxyl groups of a polyether polyol with an ene compound that also has a functional group that reacts with a hydroxyl group to form a bond to the end of the polyether chain. Examples of such capping compounds include ene-containing isocyanate compounds include, for example, 3-isopropenyl-α,α-dimethylbenzylisocyanate (TMI), 2-isocyanatoethyl methacrylate (IEM), or 2-isocyanatoethyl acrylate. Ene-terminated polyethers also can be prepared by capping a polyether polyol with an ethylenically unsaturated halide such as vinylbenzyl chloride, an ethylenically unsaturated siloxane such as vinyltrimethoxylsilane, or an ethylenically unsaturated epoxide compound.

Another approach to making an ene-terminated polyether is to cap a polyether polyol as described before with a polyisocyanate compound, preferably a diisocyanate. The polyisocyanate may be, for example, an aromatic polyisocyanate such as diphenylmethane diisocyanate or toluene diisocyanate or an aliphatic polyisocyanate such as isophorone diisocyanate, hexamethylene diisocyanate, hydrogenated toluene diisocyanate, hydrogenated diphenylmethane diisocyanate, and the like. This produces a prepolymer that contains urethane groups and terminal isocyanate groups. The isocyanate groups are then capped by reaction with an isocyanate-reactive capping compound having a hydroxyl group and an ene group as described before. Examples of such isocyanate-reactive capping compounds include, for example, allyl alcohol, vinyl alcohol and hydroxyalkylacrylate and/or hydroxyalkylmethacrylate compounds such as hydroxyethylacrylate and hydroxyethylmethacrylate.

The epoxy resin is one or more materials having an average of at least 1.5, preferably at least 1.8 epoxide groups per molecule and an epoxy equivalent weight of up to 1000. The epoxy equivalent weight preferably is up to 500, more preferably is up to 250 and still more preferably up to 225. The epoxy resin preferably has up to eight epoxide groups and more preferably has 1.8 to 4, especially 1.8 to 3, epoxide groups per molecule.

The epoxy resin is preferably a liquid at room temperature, to facilitate easy mixing with other components. However, it is possible to use a solid (at 25°C) epoxy resin, particularly if the epoxy resin is soluble in the polyene compound.

Among the useful epoxy resins include, for example, polyglycidyl ethers of polyphenolic compounds, by which it is meant compounds having two or more aromatic hydroxyl (phenolic) groups. One type of polyphenolic compound is a diphenol (*i.e.,* has exactly two aromatic hydroxyl groups) such as, for example, resorcinol, catechol, hydroquinone, biphenol, bisphenol A, bisphenol AP (1,1-bis(4-hydroxylphenyl)-1-phenyl ethane), bisphenol F, bisphenol K, tetramethylbiphenol, or mixtures of two or more thereof. The polyglycidyl ether of such a diphenol may be advanced, provided that the epoxy equivalent weight is about 1000 or less, preferably about 250 or less and more preferably about 225 of less.

Suitable polyglycidyl ethers of polyphenols include those represented by structure (I) 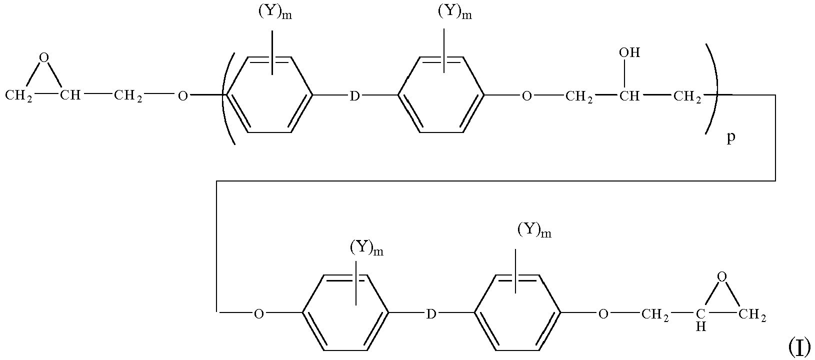 wherein each Y is independently a halogen atom, each D is a divalent hydrocarbon group suitably having from 1 to about 10, preferably from 1 to about 5, more preferably from 1 to about 3 carbon atoms, -S-, -S-S-, -SO-, -SO₂, -CO₃₋ -CO- or -O-, each m may be 0, 1, 2, 3 or 4 and p is a number such that the compound has an epoxy equivalent weight of up to 1000, preferably 170 to 500 and more preferably 170 to 225. p typically is from 0 to 1, especially from 0 to 0.5.

Fatty acid-modified polyglycidyl ethers of polyphenols, such as D.E.R. 3680 from The Dow Chemical Company, are useful epoxy resins.

Other useful polyglycidyl ethers of polyphenols include epoxy novolac resins. The epoxy novolac resin can be generally described as a methylene-bridged polyphenol compound, in which some or all of the phenol groups are capped with epichlorohydrin to produce the corresponding glycidyl ether. The phenol rings may be unsubstituted, or may contain one or more substituent groups, which, if present are preferably alkyl having up to six carbon atoms and more preferably methyl. The epoxy novolac resin may have an epoxy equivalent weight of about 156 to 300, preferably about 170 to 225 and especially from 170 to 190. The epoxy novolac resin may contain, for example, from 2 to 10, preferably 3 to 6, more preferably 3 to 5 epoxide groups per molecule. Among the suitable epoxy novolac resins are those having the general structure: 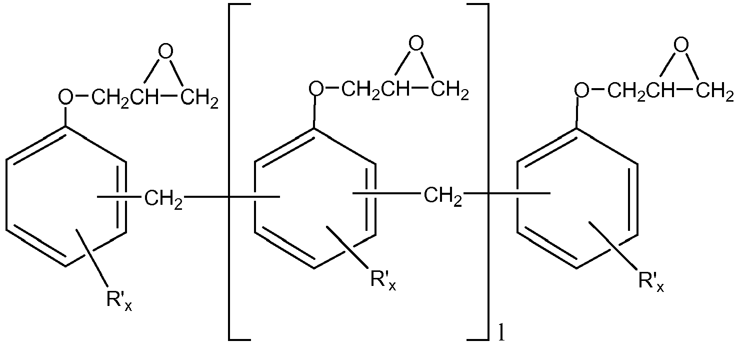 in which 1 is 0 to 8, preferably 1 to 4, more preferably 1 to 3, each R' is independently alkyl or inertly substituted alkyl, and each x is independently 0 to 4, preferably 0 to 2 and more preferably 0 to 1. R' is preferably methyl if present.

Other useful polyglycidyl ethers of polyphenol compounds include, for example, tris(glycidyloxyphenyl)methane, tetrakis(glycidyloxyphenyl)ethane, and the like. These preferably are used together with an aromatic epoxy resin such as a diglycidyl ether of a biphenol or an epoxy novolac resin.

Still other useful epoxy resins include polyglycidyl ethers of polyols, in which the epoxy equivalent weight is up to 1000, preferably up to 500, more preferably up to 250, and especially up to 200. These may contain 2 to 6 epoxy groups per molecule. The polyols may be, for example, alkylene glycols and polyalkylene glycols such as ethylene glycol, diethylene glycol, tripropylene glycol, 1,2-propane diol, dipropylene glycol, tripropylene glycol and the like as well as higher functionality polyols such as glycerin, trimethylolpropane, trimethylolethane, pentaerythritol, sorbitol and the like.

Still other useful epoxy resins include tetraglycidyl diaminodiphenylmethane; oxazolidone-containing compounds as described in U. S. Patent No. 5,112,932; cycloaliphatic epoxides; and advanced epoxy-isocyanate copolymers such as those sold commercially as D.E.R.™ 592 and D.E.R.™ 6508 (The Dow Chemical Company) as well as those epoxy resins described, for example, in WO 2008/140906.

25 to 150 parts by weight of epoxy resin(s) is provided to the reaction mixture, per 100 parts by weight of the ene compound(s) (*i.e*., component 1) above) plus any ene compound used in making a thiol-functional prepolymer as described below). The amount of epoxy resin, relative to the ene compound(s), can be varied as needed to adjust the properties of the elastomer. This ratio of epoxy resin to ene compound has been found to provide an elastomer having a combination of high elongation (at least 50% and in many cases at least 100%) and good tensile strength (at least 2100 kPa (about 300 psi), preferably at least 3500 kPa (about 500 psi)). Within this broad range, elongation generally decreases with an increasing amount of epoxy resin while tensile strength and modulus tend to increase. When the amount of epoxy resin is within the foregoing range, the epoxy resin tends to cure to form a discontinuous resin phase dispersed in a continuous phase constituted mainly by the cured ene compound (component 1)).

If a greater amount of the epoxy resin is provided, a phase inversion often is seen, in which the cured epoxy resin mainly constitutes a continuous phase of the final polymer, resulting in a low elongation product having properties similar to conventional toughened epoxy resins. To avoid forming such a low elongation material, it is preferred to provide no more than 100 parts by weight of epoxy resin(s) per 100 parts by weight of the ene compound(s) (component 1)). A more preferred amount is up to 80 parts by weight epoxy resin(s) per 100 parts by weight of the ene compounds (component 1)). To provide a higher tensile strength, the lower amount is at least 25 or at least 50 parts by weight epoxy resin per 100 parts by weight of the ene compound(s) (component 1)).

The reaction mixture further contains at least one polythiol that can react with both the ene groups of the ene compound (component 1)) and the epoxy groups of the epoxy resin(s) to form a high molecular weight polymer.

The polythiol curing agent contains at least two thiol groups. The polythiol preferably has an equivalent weight per thiol group of up to 500, more preferably up to 200 and still more preferably up to 150. This polythiol compound may contain up to 8, preferably up to 4 thiol groups per molecule.

Among the suitable polythiol compounds are mercaptoacetate and mercaptopropionate esters of low molecular weight polyols having 2 to 8, preferably 2 to 4 hydroxyl groups and an equivalent weight of up to about 75, in which some or all of the hydroxyl groups are esterified with the mercaptoacetate and/or mercaptopropionate. Examples of such low molecular weight polyols include, for example, ethylene glycol, diethylene glycol, triethylene glycol, 1,2-propane diol, 1,3-propane diol, dipropylene glycol, tripropylene glycol, 1,4-butane diol, 1,6-hexane diol, glycerin, trimethylolpropane, trimethylolethane, erythritol, pentaerythritol, sorbitol, sucrose and the like.

Other suitable polythiol compounds include alkylene dithiols such as 1,2-ethane dithiol, 1,2-propane dithiol, 1,3-propanedithiol, 1,4-butane dithiol, 1,6-hexane dithiol and the like, trithiols such as 1,2,3-trimercaptopropane, 1,2,3-tri(mercaptomethyl)propane, 1,2,3-tri(mercaptoethyl)ethane, (2,3-di((2-mercaptoethyl)thio)1-propanethiol, and the like. Yet another useful polythiol compound is a mercapto-substituted fatty acid having at least 2 mercapto substituents on the fatty acid chains, such as, for example, that having the structure:

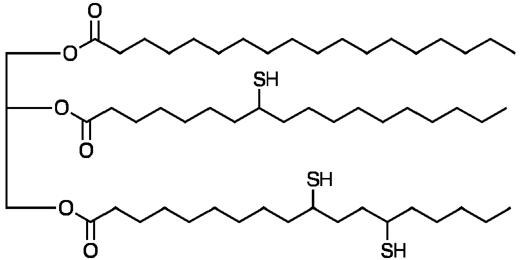

The thiol curing agent may also include a thiol-functional prepolymer made by reacting an excess of a thiol compound as just described with a polyene compound as described herein, to form a prepolymer having thiol groups.

The amount of curing agent used can vary widely, depending on the properties that are wanted in the cured product, and in some cases depending on the type of curing reactions that are desired.

The amount of curing agent present in the reaction mixture can vary considerably. The maximum amount of curing agent typically provides up to 1.25 equivalents, preferably up to 1.15 equivalents and in some cases up to 1.05 equivalents of thiol groups per equivalent of ene and epoxy groups. Larger excesses of the curing agent tend to degrade polymer properties. Because the epoxy resin(s) can polymerize with themselves and in many cases the ene compound also is capable of self-polymerization, it is possible to provide a large excess of epoxy and/or ene groups in the reaction mixture. Thus, for example, as few as 0.1, as few as 0.25 or as few as 0.5 equivalents of thiol groups in the curing agent can be provided per equivalent of epoxy and ene groups.

In some embodiments, the amount of curing agent is close to stoichiometric, *i.e.,* the total number of thiol equivalents is somewhat close to the combined number of equivalents of epoxy and ene groups provided to the reaction mixture. Thus, for example, 0.75 to 1.25 equivalents, from 0.85 to 1.15 equivalents or from 0.85 to 1.05 equivalents of thiol groups can be provided by the curing agent per equivalent of epoxide and ene groups present in the reaction mixture.

The reaction mixture contains at least one basic catalyst. For purposes of this invention, a basic catalyst is a compound that is capable of directly or indirectly extracting a hydrogen from a thiol group to form a thiolate anion. In some embodiments, the basic catalyst does not contain thiol groups and/or amine hydrogens. The catalyst preferably is the conjugate base of a material having a pKa of at least 5, preferably at least 10. The catalyst is preferably a material with a conjugate acid pKa of at least 5, preferably at least 10.

Among useful types of catalysts include inorganic compounds such as salts of a strong base and a weak acid, of which potassium carbonate and potassium carboxylates are examples, various amine compounds, and various phosphines.

Suitable amine catalysts include various tertiary amine compounds, cyclic amidine compounds such as 1,8-diazabicyclo-5.4.0-undecene-7, tertiary aminophenol compounds, benzyl tertiary amine compounds, imidazole compounds, or mixtures of any two or more thereof. Tertiaryaminophenol compounds contain one or more phenolic groups and one or more tertiary amino groups. Examples of tertiary aminophenol compounds include mono-, bis- and tris(dimethylaminomethyl)phenol, as well as mixtures of two or more of these. Benzyl tertiary amine compounds are compounds having a tertiary nitrogen atom, in which at least one of the substituents on the tertiary nitrogen atom is a benzyl or substituted benzyl group. An example of a useful benzyl tertiary amine compound is N,N-dimethyl benzylamine.

Imidazole compounds contain one or more imidazole groups. Examples of imidazole compounds include, for example, imidazole, 2-methylimidazole, 2-ethyl-4-methylimidazole, 2-undecylimidazole, 2-heptadecylimidazole, 2-phenylimidazole, 2-phenyl-4-methylimidazole, 1-benzyl-2-methylimidazole, 2-ethylimidazole, 2-isopropylimidazole, 2-phenyl-4-benzylimidazole, 1-cyanoethyl-2-undecylimidazole, 1-cyanoethyl-2-ethyl-4-methylimidazole, 1-cyanoethyl-2-undecylimidazole, 1-cyanoethyl-2-isopropylimidazole, 1-cyanoethyl-2-phenylimidazole, 2,4-diamino-6-[2'-methylimidazolyl-(1)']ethy1-s-triazine, 2,4-diamino-6-[2'-ethylimidazolyl-(1)']ethyl-s-triazine, 2,4-diamino-6-[2'-undecylimidazolyl-(1)']ethyl-s-triazine, 2-methylimidazolium-isocyanuric acid adduct, 2-phenylimidazolium-isocyanuric acid adduct, 1-aminoethyl-2-methylimidazole, 2-phenyl-4,5-dihydroxylmethylimidazole, 2-phenyl-4-methyl-5-hydroxymethylimidazole, 2-phenyl-4-benzyl-5-hydroxymethylimidazole, and compounds containing two or more imidazole rings obtained by dehydrating any of the foregoing imidazole compounds or condensing them with formaldehyde.

Other useful catalysts include phosphine compounds, *i.e.,* compounds having the general formula R³₃P, wherein each R³ is hydrocarbyl or inertly substituted hydrocarbyl. Dimethylphenyl phosphine, trimethyl phosphine, triethylphosphine and the like are examples of such phosphine catalysts.

The basic catalyst is present in a catalytically effective amount. A suitable amount is typically from about 0.01 to about 10 moles of catalyst per equivalent of thiol groups in the curing agent. A preferred amount is 0.5 to 1 mole of catalyst per equivalent of thiol groups in the curing agent.

In addition to the foregoing ingredients, the reaction mixture may contain various other materials.

One other material that can be present is a free-radical initiator, and in particular a thermally decomposable free radical initiator that produces free radicals when heated to a temperature in the range of 50 to 160°C, especially 65 to 120°C and more preferably 70 to 100°C. Such a thermally-decomposable free radical initiator compound may have a 10 minute half-life temperature of 50 to 120°C. The presence of the free radical initiator is preferred when the ene groups of the polyene compound are not easily curable via a cationic or anionic mechanism, as is often the case when the ene groups are vinyl, vinylaryl or allyl.

The presence of a free radical initiator can permit a dual-mechanism cure to take place, in which the ene reaction with a thiol takes place via a free radical mechanism, and the epoxy cure takes place via an anionic (base-catalyzed) mechanism. Such an approach permits the ene and epoxy reactions to take place sequentially, if desired, by subjecting the reaction mixture first to conditions that promote the formation of free radicals by the free radical initiator, and then to conditions sufficient to cure the epoxy resin component. Alternatively, both curing mechanisms can occur simultaneously by, for example, selecting a heat-activated free radical initiator, and exposing the reaction mixture to an elevated temperature sufficient to activate the free radical initiator and promote the epoxy curing reaction.

Certain ene compounds, in particular those having terminal acrylate and/or methacrylate ene groups, can homopolymerize in the presence of free radicals. Thus, in some embodiments, an excess of ene compounds having acrylate and/or methacrylate ene groups (over the amount of thiol groups in the curing agent) can be provided in conjunction with a free radical initiator, to promote a certain amount of homopolymerization of the ene compound in addition to the ene/thiol curing reaction. In other embodiments, the ene compound contains, for example, vinyl and/or allyl ene groups, which do not homopolymerize to a significant extent under free radical conditions. In such a case, the presence of a free radical initiator may still be of benefit, as it allows for the dual cure mechanism in which the ene groups react with the thiol groups via a free radical mechanism and the epoxy cures via a base-catalyzed mechanism.

Examples of suitable free-radical generators include, for example, peroxy compounds (such as, for example, peroxides, persulfates, perborates and percarbonates), azo compounds and the like. Specific examples include hydrogen peroxide, di(decanoyl)peroxide, dilauroyl peroxide, t-butyl perneodecanoate, 1,1-dimethyl-3-hydroxybutyl peroxide-2-ethyl hexanoate, di(t-butyl)peroxide, t-butylperoxydiethyl acetate, t-butyl peroctoate, t-butyl peroxy isobutyrate, t-butyl peroxy-3,5,5-trimethyl hexanoate, t-butyl perbenzoate, t-butyl peroxy pivulate, t-amyl peroxy pivalate, t-butyl peroxy-2-ethyl hexanoate, lauroyl peroxide, cumene hydroperoxide, t-butyl hydroperoxide, azo bis(isobutyronitrile), 2,2'-azo bis(2-methylbutyronitrile) and the like.

A useful amount of free-radical initiator is 0.2 to 10 parts by weight per 100 parts by weight of ene compound(s).

Another optional component is one or more low equivalent weight ene compounds. Such compound(s) have one or more ene groups as described before and may have, for example, an equivalent weight per ene group of up to about 450, preferably up to about 250. Such low equivalent weight ene compounds can be produced, for example, by capping the hydroxyl groups of a low (up to 125, preferably up to 75) equivalent weight polyol with an unsaturated isocyanate compound such as 3-isopropenyl-a,a-dimethylbenzylisocyanate (TMI), 2-isocyanatoethyl methacrylate (IEM), or 2-isocyanatoethyl acrylate, an ethylenically unsaturated halide such as vinyl benzyl chloride, an ethylenically unsaturated siloxane such as vinyltrimethoxylsilane, an ethylenically unsaturated epoxide compound, or a hydroxyalkyl acrylate or methacrylate. Low equivalent weight ene compounds also can be produced by capping a polyisocyanate, preferably a diisocyanate, with an isocyanate-reactive capping compound having a hydroxyl group and an ene group as described before. Other useful low equivalent weight ene compounds include divinyl arene compound such as divinyl benzene.

In some embodiments of the invention, mixtures of high and low equivalent weight ene compounds can be produced by (1) reacting an excess of a polyisocyanate with a polyether polyol, optionally in the presence of a chain extender, to form a quasi-prepolymer containing isocyanate terminated polyether compounds unreacted (monomeric) polyisocyanates and then (2) capping the isocyanate groups with an isocyanate-reactive capping compound having a hydroxyl group and an ene group as described before. This caps the prepolymer molecules and the remaining monomeric isocyanate compounds to produce a mixture of high and low equivalent weight ene compounds.

The reaction mixture may contain other materials in addition to those described above. Such additional materials may include, for example, one or more colorants, one or more reactive diluents, one or more antioxidants, one or more preservatives, one or more flame retardants, one or more fibers, one or more non-fibrous particulate fillers (including micron- and nano-particles), one or more wetting agents and the like.

The reaction mixture preferably is substantially free of manganese dioxide, thiram and isocyanate compounds. Such compounds, if present at all, preferably constitute at most 1%, more preferably at most 0.25% of the weight of the reaction mixture. Most preferably the reaction mixture contains no measurable amount of any of these compounds.

To facilitate application, it is often convenient to formulate the starting materials into a two-component system. The first component contains the epoxy resin and at least a portion of the polyene compound(s). The second component contains the curing agent. It is often beneficial to formulate the first and second components to have similar viscosities at the mixing temperature (such as within 50%, more preferably within 25% of that of the lower viscosity component) to facilitate mixing. Because the polyene compound tends to be the reactive ingredient having the highest viscosity, the first component tends to have a much higher viscosity than the second component. One way to make the viscosities of the components similar is to divide the polyene compound between the first and second components, so some of the polyene compound is in each of the first and second components.

It is generally preferred to formulate the catalyst with the second component.

The mixing and application can be done in any convenient manner. In the preferred case in which the ingredients are formulated into two components, the components are simply combined at ambient temperature or any desirable elevated temperature. The mixing of the components can be done in any convenient way, depending on the particular application and available equipment. Mixing of the components can be done batchwise, mixing them by hand or by using various kinds of batch mixing devices, followed by application to the cable joint, preferably by introducing the reaction mixture into the reservoir of a mold as described before. The two components can be packaged into separate cartridges and simultaneously dispensed through a static mixing device to mix and apply them to the joint. Alternatively, the two components can be packaged into pouches with a barrier seal. The contents of the pouches can be mixed by hand or any suitable equipment and then poured to the cable joint.

Other continuous metering and dispensing systems also are useful to mix and dispense the reaction mixture, particularly in industrial settings.

Curing in many cases proceeds spontaneously at room temperature (about 20°C) or even slightly below room temperature. Because of this, the reaction mixture often is cured by applying it to the cable joint at an ambient temperature from 0 to 45°C, preferably 5 to 40°C, and allowing the reaction mixture to spontaneously cure without further application of external heat. Curing under ambient conditions to a tack-free state typically requires 30 minutes to 8 hours, depending on the ambient temperature. Full cure typically takes 5 to 30 hours. Although the application of further heating is not necessary to effect a cure, the applied reaction mixture of course can be heated if desired to speed the cure.

The curing reaction is generally exothermic, and a corresponding temperature rise may occur. An advantage of this invention is that exothermic temperature rises are generally moderate, and much lower than for many epoxy resin systems useful for cable joining applications. Reaction mixtures of the invention typically exhibit an exotherm temperature of no greater than 120°C when evaluated according to the method described in Example 1B below.

In some embodiments, curing can be performed by exposing the reaction mixture to free radicals and/or conditions that generate free radicals. This can be done, if desired, in addition to performing an elevated temperature cure. Free radicals can be provided in various ways. In some embodiments, the reaction mixture is exposed to a light source, preferably a source of ultraviolet light such as a mercury discharge lamp or a UV-producing LED. The ultraviolet light source may provide UV radiation at an intensity of, for example, 10 mW/cm² to 10 W/cm². In other embodiments, the reaction mixture is exposed to a plasma. In still other embodiments, the free radicals are generated by the decomposition of a free radical initiator compound as described before. In the last case, free radicals can be generated thermally by exposing the reaction mixture to an elevated temperature, thereby promoting a free radical curing mechanism as well as accelerating the reaction of the epoxy resin(s) with the curing agent.

Free radical conditions tend to promote the ene-thiol curing reaction but not an epoxy curing reaction. Therefore, it is usually necessary to provide a catalyst for the epoxy curing reaction even if a free radical cure is performed.

In some cases, especially when the ene compound contains acrylate and/or methacrylate ene groups, free radical conditions also can promote a homopolymerization of the ene compound(s). When it is desired to promote such a homopolymerization, the reaction mixture preferably includes at least one ene compound having acrylate and/or methacrylate ene groups, and also preferably includes an excess of ene and epoxy groups, relative to the amount of curing agent, such as at least 1.25, up to as many as 10, equivalents of ene and epoxy groups per equivalent of thiol groups in the curing agent. If the homopolymerization of the ene is not desired, it is preferred that the ene compounds are devoid of ene groups such as acrylate and methacrylate groups, which homopolymerize under free radical conditions.

The cured polymer is elastomeric. It typically has an elongation to break of at least 50%, preferably at least 100%, as determined according to ASTM D1708. Elongation to break may be as much as 1000% or more. A typical elongation is 100 to 400%, especially 100 to 250%. Tensile strength is often at least 100 kPa (about 150 psi), at least 2000 kPa (about 300 psi), in some embodiments at least 3500 kPa (about 500 psi), and in especially preferred embodiments at least 7000 kPa (about 1000 psi). Tensile strength may be 28,000 kPa (about 4000 psi) or higher, but is more typically up to 21000 kPa (about 3000) psi or up to 14000 kPa (about 2000 psi). The elastomer in many embodiments has a Shore A hardness of 60 to 95, more typically 70 to 95 and still more typically 70 to 90, although harder elastomers can be produced. An advantage of this invention is that properties can be tailored through the selection of starting materials, the ratios of starting materials, and to some extent the manner of cure.

The following examples are provided to illustrate the invention, but not limit the scope thereof. All parts and percentages are by weight unless otherwise indicated.

### Example 1

### A. Synthesis of acrylate-terminated polyether

74.5 g (428 mmol) toluene diisocyanate (TDI, 80/20 mixture of 2,4- and 2,6-isomers) is charged to a dry 2 L 4-neck round bottom flask equipped with overhead stirring, temperature control probe, addition funnel, and nitrogen inlet. The flask and its contents are heated to 80°C, and 827 g (207 mmol) of a 4000 molecular weight, nominally difunctional poly(propylene oxide) diol is added. The solution is stirred for 30 minutes after the diol is added. A drop of dibutyltin dilaurate is added and the reaction stirred for an additional 2 hours. The product is an isocyanate-terminated prepolymer having an isocyanate content of 2.04% by weight, as determined by titration.

881.2 grams of the prepolymer is brought to a temperature of 45°C. 54.3 g (467.6 mmole) of hydroxyethylacrylate (95%) and a drop of dibutyltin dilaurate are added. The reaction mixture is stirred at 45°C until no measurable isocyanate groups remain as observed by FT-IR. The resulting product is a polyether capped with two terminal acrylate (-O-C(O)-CH=CH₂) groups per molecule.

### B. Production of Phase-Segmented Elastomer

150.00 g of the acrylate-terminated polyether produced in A above and 100.00 g of a 180 epoxy equivalent weight diglycidyl ether of bisphenol A (D. E. R. 383, from The Dow Chemical Company) are mixed on a high-speed laboratory mixer until homogeneous. Separately, 26.41 g of trimethylolpropane tris(3-mercaptopropionate) (Sigma Aldrich technical grade) is mixed with 99 mg (1 mole-% based on trimethylolpropane tris(3-mercaptopropionate)) of 1,8-diazabicyclo[5.4.0]undec-7-ene (DBU, Sigma Aldrich technical grade) on a high-speed laboratory mixer until homogeneous. The thiol/catalyst mixture is then mixed with 74.68 g of the acrylate-terminated prepolymer/epoxy resin mixture on the high-speed mixer to produce a clear mixture. These proportions of starting materials provide about 1.0 equivalents of thiol groups per combined equivalents of acrylate and epoxide groups. The mixture is poured into a mold warmed to 50°C. The filled mold is then placed in a 50°C oven overnight. A tack-free plaque is obtained. The cured plaque contains 25% by weight cured epoxy resin, calculated as described before.

The plaque has a tensile strength of 6200 kPa (about 900 psi) and an elongation at break of around 120% (as measured per ASTM D1708). The Shore A hardness is 78.

A 2 in X 2 in (5 cm X 5 cm) section of the cured plaque is placed in deionized water and heated at 70°C for 4 weeks. The sample is then dried and its mass gain, tensile strength, elongation and Shore A hardness are measured. The sample gains 2.0% in mass, presumably due to reaction with and/or absorption of water. A 20% reduction in tensile strength is seen, which is indicative of good hydrolytic stability even under aggressive conditions.

A 2 in X 2 in (5 cm X 5 cm) section of the cured plaque is heated in air for 4 weeks at 120°C. The sample loses only 0.6% of its initial weight.

The same formulation is mixed as described above, cast as a 30 mil thick film, and cured at room temperature. The cured film has a dielectric constant of 6.2 at 60 Hz. This value is suitable for cable jointing materials.

The reaction mixture is evaluated for exothermic temperature rise as follows: The acrylate-terminated polyether/epoxy resin mixture was prepared as described above, and allowed to equilibrate to ASTM lab conditions for at least 4 hours. 25.64 g of trimethylolpropane tris (3-mercaptopropionate) (Sigma Aldrich technical grade) is mixed with 97 mg (1 mole-% based on trimethylolpropane tris (3-mercaptopropionate)) of 1,8-diazabicyclo [5.4.0] undec-7-ene (DBU, Sigma Aldrich technical grade) on a high-speed laboratory mixer until homogeneous. Speed mixing does not instill a large amount of heat into the system and therefore the system is not equilibrated again after mixing. 25.23 g of thiol/DBU mixture is added to 74.77 g of the acrylate/epoxy mixture, and then speed mixed until uniform. Speed mixing results in a temperature increase to 30-35°C. 100 g of the clear mixture is placed into a nearly adiabatic holder with a lid and thermocouple assembly. The temperature profile is recorded until the temperature cools back down to room temperature (~23 °C). The maximum temperature achieved during cure is 103°C at 46 minutes.

When this system is applied over a cable joint and cured, the cured elastomer forms an elastomeric insulating sheath over the joint, which adheres well to the cable insulation, forming a water-impermeable coating.

### Examples 2-3

Example 2: An acrylate-terminated polyether having an equivalent weight per terminal acrylate group of about 2150 is made in the general manner described in Example 1. Elastomer Example 2 is made from this acrylate-terminated polyether, using the formulation as set forth in Table 1 below. The acrylate-terminated polyether is mixed with the epoxy resin in a high-speed laboratory mixer, and then a mixture of the thiol and catalyst is stirred in. The resulting reaction mixture is poured into a mold warmed to 50°C. The filled mold is then placed in a 50°C oven overnight. A tack-free plaque is obtained. A second 100 g sample is prepared as described and the temperature recorded while curing as in Example 1.

Example 3 is made in the same manner, except half of the acrylate-terminated polyether is prereacted with trimethylolpropane tris(3-mercaptopropionate) to form a prepolymer terminated in thiol groups. The epoxy resin and the remaining acrylate-terminated polyether are then reacted with the prepolymer. A 30 mil thin film is prepared as described above.

Exotherm data, tensile strength, elongation, Shore A hardness, water absorption, tensile degradation, weight loss, and dielectric properties for each of Examples 2 and 3 are as reported in Table 1.

When Examples 2 and 3 are applied over a cable joint and cured, the cured elastomer in each case forms an elastomeric insulating sheath over the joint, which adheres well to the cable insulation, forming a water-impermeable coating.

**Table 1**

| Ingredient | Parts by weight | |
|---|---|---|
| | Ex. 2 | Ex. 3 |
| Acrylate-terminated polyether | 15 | 7.5 |
| DER 383 Epoxy resin | 10 | 10 |
| Trimethylolpropane tris (3-mercaptopropionate) | 8.8 | -- |
| Trimethylolpropane tris (3-mercaptopropionate) based prepolymer | -- | 16.34 |
| DBU catalyst | 0.033 | 0.033 |
| | | |
| **Properties** | | |
| Peak exotherm, °C | 115 | 112 |
| Time to peak exotherm, min | 29 | 35 |
| Tensile Str, kPa (psi) | 5500 (800) | 3590 (520) |
| Elongation, % | 212 | 152 |
| Shore A hardness | 75 | 68 |
| Water absorption, wt % | 2.9 | 2.4 |
| Tensile degradation, % | 24 | 32 |
| Weight loss, wt % | 0.2 | 0.5 |
| Dielectric strength at 60 Hz | Not determined | 42.5 kV/mm (1079 V/mil) |
| Dielectric constant at 60 Hz | 5.81 | 6.82 |

### Example 4

An acrylate-terminated polyether having an equivalent weight per terminal acrylate group of about 2150 is made in the general manner described in Example 1. Elastomer Example 4 is made from this acrylate-terminated polyether, using the formulation as set forth in Table 1 below. The acrylate-terminated polyether is mixed with the epoxy resin in a high-speed laboratory mixer, and then a mixture of the thiol and catalyst is stirred in. The resulting reaction mixture is poured into a mold warmed to 50°C. The filled mold is then placed in a 50°C oven overnight. A tack-free plaque is obtained. Tensile strength, elongation, Shore A hardness, water absorption, tensile degradation, weight loss, and dielectric properties are as reported in Table 2.

**Table 2**

| Ingredient | Parts by weight |
|---|---|
| | Ex. 4 |
| Acrylate-terminated prepolymer | 15 |
| DER 383 Epoxy resin | 10 |
| Trimethylolpropane tris (3-mercaptopropionate) | 6.63 |
| Trifunctional alkyl thiol | 1.44 |
| DBU catalyst | 0.033 |
| | |
| **Properties** | |
| Tensile Str, kPa (psi) | 3275 (475) |
| Elongation, % | 140 |
| Shore A hardness | 73 |
| Water absorption, wt % | 2.3% |
| Tensile degradation, % | 15% |
| Dielectric constant at 60 Hz | 5.30 |

When this system is applied over a cable joint and cured, the cured elastomer forms an elastomeric insulating sheath over the joint, which adheres well to the cable insulation, forming a water-impermeable coating.

### Example 5-6

An acrylate-terminated polyether having an equivalent weight per terminal acrylate group of about 2150 is made in the general manner described in Example 1A. Elastomer Examples 5-6 are made from this acrylate-terminated polyether, using the formulation as set forth in Table 1 below. In each case, the acrylate-terminated polyether is mixed with the epoxy resin in a high-speed laboratory mixer, and then a mixture of the thiol and catalyst are stirred in. The resulting reaction mixture is poured into a mold warmed to 50°C. The filled mold is then placed in a 50°C oven overnight. A tack-free plaque is obtained. Tensile strength, elongation, and Shore hardness are as reported in Table 3.

**Table 3**

| Ingredient | Parts by weight | |
|---|---|---|
| | Ex. 5 | Ex. 6 |
| Acrylate-terminated prepolymer | 20 | 20 |
| DER 383 Epoxy resin | 20 | 20 |
| Trimethylolpropane tris(3-mercaptopropionate) | 16.06 | 16.75 |
| DBU catalyst | 0.061 | 0.063 |
| | | |
| **Properties** | | |
| Tensile Str, kPa (psi) | 7895 (1145) | 5170 (750) |
| Elongation, % | 99 | 61 |
| Shore A hardness | 83 | 85 |

When these systems are applied over a cable joint and cured, the cured elastomer in each case forms an elastomeric insulating sheath over the joint, which adheres well to the cable insulation, forming a water-impermeable coating.

## Claims

1. A method for making a cable joint, comprising the steps of:
a) joining a first bare conductor end of a first cable having a polymeric insulation to a second bare conductor end of a second cable having a polymeric insulation to create a conductor joint and
b) applying a curable reaction mixture over the conductor joint and in contact with the polymeric insulation of the first cable and the second cable and
c) curing the curable reaction mixture to form a polymeric insulating sheath over the conductor joint and bonded to the polymeric insulation of each of the first and second cables;
wherein the curable reaction mixture contains 1) at least one polyene compound having an average of at least two groups containing aliphatic carbon-carbon double bonds capable of reaction with a thiol group, wherein at least one of said aliphatic carbon-carbon double bonds is separated from each of said aliphatic carbon-carbon double bonds by an aliphatic spacer group having a molecular weight of at least 1000 atomic mass units, 2) from 25 to 150 parts by weight, per 100 parts by weight of component 1), of at least one epoxy resin having an average of at least 1.5 epoxide groups per molecule and an epoxy equivalent weight of up to 1000, 3) at least one curing agent having at least two thiol groups, and 4) at least one basic catalyst.

2. The method of claim 1, wherein the aliphatic spacer group includes at least one poly(alkylene oxide) chain having a molecular weight of at least 2000 atomic mass units.

3. The method of claim 2, wherein the poly(alkylene oxide) chain has a weight of 4000 to 8000 atomic mass units.

4. The method of any preceding claim, wherein the epoxy resin has an epoxy equivalent weight of up to 250.

5. The method of any preceding claim, wherein the epoxy resin includes at least one polyglycidyl ether of a polyphenol compound.

6. The method of any preceding claim, wherein the curing agent includes at least one polythiol compound that contains from 2 to 4 thiol groups, or a mixture of two or more polythiol compounds that each contain 2 to 4 thiol groups.

7. The method of claim 6, wherein the polythiol compound(s) have a thiol equivalent weight of 50 to 250.

8. The method of any preceding claim wherein the base catalyst includes at least one amine compound.

9. The method of claim 8, wherein the base catalyst includes at least one cyclic or bicyclic amidine catalyst.

10. The method of any preceding claim wherein the terminal aliphatic carbon-carbon double bonds are acrylate groups.

## Patentansprüche

1. Ein Verfahren zum Herstellen einer Kabelverbindung, das die folgenden Schritte beinhaltet:
a) Verbinden eines ersten nackten Leiterendes eines ersten Kabels, das eine polymere Isolierung aufweist, mit einem zweiten nackten Leiterende eines zweiten Kabels, das eine polymere Isolierung aufweist, um eine Leiterverbindung zu erzeugen, und
b) Aufbringen eines härtbaren Reaktionsgemisches über der Leiterverbindung und in Kontakt mit der polymeren Isolierung des ersten Kabels und des zweiten Kabels, und
c) Härten des härtbaren Reaktionsgemisches zum Bilden eines polymeren Isoliermantels über der Leiterverbindung, der an die polymere Isolierung jedes von dem ersten und zweiten Kabel gebunden ist;
wobei das härtbare Reaktionsgemisch Folgendes enthält: 1) mindestens eine Polyenverbindung mit durchschnittlich mindestens zwei Gruppen, die aliphatische Kohlenstoff-Kohlenstoff-Doppelbindungen enthalten, die mit einer Thiolgruppe reagieren können, wobei mindestens eine der aliphatischen Kohlenstoff-Kohlenstoff-Doppelbindungen von jeder der aliphatischen Kohlenstoff-Kohlenstoff-Doppelbindungen durch eine aliphatische Spacergruppe mit einem Molekulargewicht von mindestens 1 000 atomaren Masseneinheiten getrennt ist, 2) 25 bis 150 Gewichtsteile pro 100 Gewichtsteile der Komponente 1) von mindestens einem Epoxidharz mit durchschnittlich mindestens 1,5 Epoxidgruppen pro Molekül und einem Epoxidäquivalentgewicht von bis zu 1 000, 3) mindestens ein Härtungsmittel mit mindestens zwei Thiolgruppen und 4) mindestens einen basischen Katalysator.

2. Verfahren gemäß Anspruch 1, wobei die aliphatische Spacergruppe mindestens eine Poly(alkylenoxid)kette mit einem Molekulargewicht von mindestens 2 000 atomaren Masseneinheiten umfasst.

3. Verfahren gemäß Anspruch 2, wobei die Poly(alkylenoxid)kette ein Gewicht von 4 000 bis 8 000 atomaren Masseneinheiten aufweist.

4. Verfahren gemäß einem der vorhergehenden Ansprüche, wobei das Epoxidharz ein Epoxidäquivalentgewicht von bis zu 250 aufweist.

5. Verfahren gemäß einem der vorhergehenden Ansprüche, wobei das Epoxidharz mindestens einen Polyglycidylether einer Polyphenolverbindung umfasst.

6. Verfahren gemäß einem der vorhergehenden Ansprüche, wobei das Härtungsmittel mindestens eine Polythiolverbindung umfasst, die 2 bis 4 Thiolgruppen enthält, oder ein Gemisch aus zwei oder mehreren Polythiolverbindungen, die jeweils 2 bis 4 Thiolgruppen enthalten.

7. Verfahren gemäß Anspruch 6, wobei die Polythiolverbindung(en) ein Thioläquivalentgewicht von 50 bis 250 aufweist/aufweisen.

8. Verfahren gemäß einem der vorhergehenden Ansprüche, wobei der Basenkatalysator mindestens eine Aminverbindung umfasst.

9. Verfahren gemäß Anspruch 8, wobei der Basenkatalysator mindestens einen cyclischen oder bicyclischen Amidinkatalysator umfasst.

10. Verfahren gemäß einem der vorhergehenden Ansprüche, wobei die endständigen aliphatischen Kohlenstoff-Kohlenstoff-Doppelbindungen Acrylatgruppen sind.

## Revendications

1. Une méthode pour réaliser un raccord de câble, comprenant les étapes consistant :
a) à raccorder une première extrémité de conducteur dénudée d'un premier câble ayant une isolation polymérique à une deuxième extrémité de conducteur dénudée d'un deuxième câble ayant une isolation polymérique afin de créer un raccord de conducteurs et
b) à appliquer un mélange réactionnel durcissable sur le raccord de conducteurs et en contact avec l'isolation polymérique du premier câble et du deuxième câble et
c) à durcir le mélange réactionnel durcissable afin de former une gaine isolante polymérique sur le raccord de conducteurs et liée à l'isolation polymérique de chacun des premier et deuxième câbles ;
dans laquelle le mélange réactionnel durcissable contient 1) au moins un composé polyène ayant une moyenne d'au moins deux groupes contenant des liaisons doubles carbone-carbone aliphatiques capables de réagir avec un groupe thiol, au moins une desdites liaisons doubles carbone-carbone aliphatiques étant séparée de chacune desdites liaisons doubles carbone-carbone aliphatiques par un groupe espaceur aliphatique ayant une masse moléculaire d'au moins 1 000 unités de masse atomique, 2) de 25 à 150 parties en poids, pour 100 parties en poids du composant 1), d'au moins une résine époxy ayant une moyenne d'au moins 1,5 groupe époxyde par molécule et un poids équivalent d'époxy allant jusqu'à 1 000, 3) au moins un agent durcisseur ayant au moins deux groupes thiol, et 4) au moins un catalyseur basique.

2. La méthode de la revendication 1, dans laquelle le groupe espaceur aliphatique inclut au moins une chaîne poly(oxyde d'alkylène) ayant un poids moléculaire d'au moins 2 000 unités de masse atomique.

3. La méthode de la revendication 2, dans laquelle la chaîne poly(oxyde d'alkylène) a un poids de 4 000 à 8 000 unités de masse atomique.

4. La méthode de n'importe quelle revendication précédente, dans laquelle la résine époxy a un poids équivalent d'époxy allant jusqu'à 250.

5. La méthode de n'importe quelle revendication précédente, dans laquelle la résine époxy inclut au moins un polyglycidyl éther d'un composé polyphénol.

6. La méthode de n'importe quelle revendication précédente, dans laquelle l'agent durcisseur inclut au moins un composé polythiol qui contient de 2 à 4 groupes thiol, ou un mélange de deux, ou plus, composés polythiol qui contiennent chacun de 2 à 4 groupes thiol.

7. La méthode de la revendication 6, dans laquelle le(s) composé(s) polythiol a (ont) un poids équivalent de thiol allant de 50 à 250.

8. La méthode de n'importe quelle revendication précédente dans laquelle le catalyseur de base inclut au moins un composé amine.

9. La méthode de la revendication 8, dans laquelle le catalyseur de base inclut au moins un catalyseur amidine cyclique ou bicyclique.

10. La méthode de n'importe quelle revendication précédente dans laquelle les liaisons doubles carbone-carbone aliphatiques terminales sont des groupes acrylates.
